Europäisches Patentamt

European Patent Office

Office européen des brevets

(19)

(11) **EP 0 724 317 A2**

(12) **EUROPÄISCHE PATENTANMELDUNG**

(43) Veröffentlichungstag:
  **31.07.1996 Patentblatt 1996/31**

(51) Int Cl.$^6$: **H02B 13/035**

(21) Anmeldenummer: **95810780.7**

(22) Anmeldetag: **11.12.1995**

(84) Benannte Vertragsstaaten:
  **CH DE FR GB IT LI NL SE**

(30) Priorität: **28.12.1994 DE 4446944**

(71) Anmelder: **ABB RESEARCH LTD.**
  **CH-8050 Zürich 11 (CH)**

(72) Erfinder:
  • **Jülke, Elias, Dr.**
    **CH-5430 Wettingen (CH)**

  • **Brühl, Bodo, Dr.**
    **CH-5444 Künten (CH)**
  • **Ritzer, Leopold**
    **CH-5417 Untersiggenthal (CH)**

(74) Vertreter: **Kaiser, Helmut, Dr. et al**
  **ABB Management AG,**
  **Abt. TEI - Immaterialgüterrecht**
  **CH-5401 Baden (CH)**

(54) **Hochspannungsanlage**

(57) Diese Hochspannungsanlage weist ein isoliergasgefülltes metallisches Gehäuse (1,5) auf, welches spannungsbeaufschlagte Aktivteile (3,7) umgibt. Sie ist mit Isolatoren für die elektrisch isolierende Abstützung der Aktivteile (3,7) im Gehäuse (1,5), mit elektrisch isolierend ausgebildeten Antriebsmitteln für die Betätigung der beweglichen Partien der Aktivteile und mit mindestens einem mindestens die Isolatoren und die elektrisch isolierend ausgebildeten Antriebsmittel bedeckenden Schutzbelag (11) versehen.

Es soll eine Hochspannungsanlage mit einer Schutzschicht geschaffen werden, welche für freigesetzte, chemisch aggressive Zersetzungsprodukte, insbesondere Flusssäure, während der gesamten Lebensdauer der Anlage undurchlässig ist. Dies wird dadurch erreicht, dass der Schutzbelag (11) derart ausgebildet ist, dass bei Betrieb der Anlage im Isoliergas gebildete Zersetzungsprodukte in den Schutzbelag (11) eindringen, und dass der Schutzbelag (11) mindestens eine Komponente aufweist, welche mit den Zersetzungsprodukten unter Bildung mindestens eines festen, nichthygroskopischen Umsetzungsproduktes reagiert. Das durch die Umsetzung entstandene Umsetzungsprodukt verbleibt danach im Schutzbelag (11).

FIG. 1

**Beschreibung**

TECHNISCHES GEBIET

Die Erfindung geht aus von einer Hochspannungsanlage gemäss dem Oberbegriff des Anspruchs 1.

STAND DER TECHNIK

Es sind Hochspannungsanlagen bekannt, die eine geerdete, mit Isoliergas, beispielsweise $SF_6$, gefüllte, metallische Kapselung aufweisen, deren innere, den hochspannungsbeaufschlagten Aktivteilen gegenüberliegende Oberfläche, mit einem Schutzbelag versehen ist. Dieser Schutzbelag soll diese Oberfläche glatt machen, unter anderem damit sie gereinigt werden kann, ohne dass Fasern oder sonstige Rückstände von Reinigungshilfen durch Oberflächenrauhigkeiten der inneren Oberfläche zurückgehalten werden, wodurch die dielektrische Festigkeit der Gasisolierstrecke reduziert würde. Die Oberfläche der Aktivteile wird bei derartigen Anlagen aus den gleichen Gründen ebenfalls häufig mit einem gleichartigen Schutzbelag versehen.

Aus der Schrift DE 41 20 309 A1 ist eine Hochspannungsanlage bekannt, die eine isoliergasgefüllte metallische Kapselung aufweist, welche die spannungsbeaufschlagten Aktivteile umgibt. Auf der inneren Oberfläche der Kapselung ist ein zum Teil mehrschichtiger Schutzbelag vorgesehen, ebenso auf der äusseren Oberfläche der Aktivteile. Bei dieser Hochspannungsanlage kann eine Reduzierung der dielektrischen Festigkeit der Isoliergasstrecken durch frei bewegliche oder fixierte Partikel nur beschränkt auftreten. Diese Schutzbeläge sind jedoch in der Regel nicht dafür geeignet chemisch aktive Schaltrückstände oder aggressive Zersetzungsprodukte in nicht hygroskopische Substanzen umzusetzen.

In den heutigen Hochspannungsanlagen des oben beschriebenen Typs werden Isolierteile aus quarzmehlgefülltem bzw. glasfaserverstärktem Giessharz nur bedingt eingesetzt, da die Zersetzungsprodukte des die Hochspannungsanlage füllenden Isoliergases die Silikate der Füllung bzw. Verstärkung angreifen. Wird als Isoliergas Schwefelhexafluorid ($SF_6$) eingesetzt, wie dies heute mehrheitlich der Fall ist, so wirkt insbesondere die dann entstehende Flusssäure (HF) besonders aggressiv auf die Silikate ein. Wird ein derartiges Isolierteil mit einem der herkömmlichen Schutzlacke überzogen, so kann dieser Schutzüberzug das Eindringen der aggressiven Zersetzungsprodukte lediglich etwas verzögern. Wie Versuche zeigten, hatten herkömmliche Schutzschichten von 100μm bis 200μm Dicke eine ungenügende Schutzwirkung von lediglich ein bis drei Stunden Dauer bei Raumtemperatur. Soll ein länger andauernder Schutz des Isolierteils erreicht werden, so muss die Schutzlackschicht dicker aufgetragen werden, was ein aufwendiges Aufbringen von mehreren Lackschichten mit jeweils zwischengeschalteten Trocknungsvorgängen bedingt. Ein dauernder Schutz gegen diese aggressiven Zersetzungsprodukte lässt sich auf diese Art jedoch nicht erreichen.

DARSTELLUNG DER ERFINDUNG

Die Erfindung, wie sie in den unabhängigen Ansprüchen gekennzeichnet ist, löst die Aufgabe, eine Hochspannungsanlage mit einer Schutzschicht zu schaffen, welche für freigesetzte, chemisch aggressive Zersetzungsprodukte, insbesondere Flusssäure, während der Lebensdauer der Anlage undurchlässig ist.

Die durch die Erfindung erreichten Vorteile sind im wesentlichen darin zu sehen, dass Feststoffisolatoren, die silikathaltige Füllstoffe aufweisen, nun mit einer Schutzschicht versehen werden können, die mit grosser Sicherheit verhindert, dass die aggressiven Zersetzungsprodukte, insbesondere die Flusssäure, die silikathaltigen Füllstoffe angreifen und so den Isolator mechanisch und dielektrisch schwächen können. Es ist ein wesentlicher wirtschaftlicher Vorteil, wenn diese vergleichsweise günstig herstellbaren Feststoffisolatoren mit Hilfe einer einfach aufzubringenden Schutzschicht nun auch in aggressiver Umgebung eingesetzt werden können.

Ferner ist es vorteilhaft, dass einerseits die aggressiven Zersetzungsprodukte unschädlich gemacht werden, und dass damit gleichzeitig die Anzahl der in den Isolationsstrecken frei beweglichen Partikel reduziert wird.

Die in die Schutzschicht eindringenden aggressiven Zersetzungsprodukte werden zuverlässig in nicht hygroskopische, elektrisch isolierende Substanzen umgesetzt, welche in der Schutzschicht gebunden werden.

Die Hochspannungsanlage ist mit einem isoliergasgefüllten metallischen Gehäuse versehen, welches spannungsbeaufschlagte Aktivteile umgibt. Es ist zudem mit Isolatoren für die elektrisch isolierende Abstützung der Aktivteile im Gehäuse und mit elektrisch isolierend ausgebildeten Antriebsmitteln für die Betätigung der beweglichen Partien der Aktivteile versehen. Die Isolatoren und die elektrisch isolierend ausgebildeten Antriebsmittel sind mit einem Schutzbelag überzogen. Der Schutzbelag ist derart ausgebildet, dass beim Betrieb der Anlage im Isoliergas gebildete Zersetzungsprodukte in den Schutzbelag eindringen, und er weist mindestens eine Komponente auf, welche mit den Zersetzungsprodukten unter Bildung mindestens eines festen, nichthygroskopischen und elektrisch isolierenden Umsetzungsproduktes reagiert.

Die mindestens eine Komponente ist als ein nanostrukturiertes Material ausgebildet. Als nanostrukturiertes Material werden $Al_2O_3$ oder MgO vorgesehen. Als Basis des Schutzbelags ist ein Epoxidlack oder ein Lack auf der Basis von Polyester, von Acrylharz oder von Polyurethan vorgesehen. Es ist jedoch auch möglich, als Basis des Schutzbelags ein Harz, welches mit einer Polyester-PETP-Faserverstärkung versehen ist, einzusetzen. Diese Ausführung des Schutzbelags ist besonders vorteilhaft, da dieser dann beispielsweise als Basis für das Wickeln eines Isolierrohres eingesetzt werden kann.

Durch die in der Form eines Pigments hinzugegebene Komponente wird die Oberfläche des Schutzbelags matt, damit wird gleichzeitig die Haftung von weiteren Schichten des Schutzbelags, die gegebenenfalls noch aufgetragen werden, vorteilhaft verbessert.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen Ausführungsweg darstellt, näher erläutert.

KURZE BESCHREIBUNG DER ZEICHNUNG

Es zeigen:

Fig. 1 einen ersten Teilschnitt durch eine erfindungsgemässe Hochspannungsanlage,

Fig. 2 einen zweiten Teilschnitt durch eine erfindungsgemässe Hochspannungsanlage, und

Fig. 3 einen Teilschnitt durch ein Isolierrohr, beispielsweise ein Löschkammerisolierrohr.

Bei den Figuren sind gleich wirkende Elemente mit gleichen Bezugszeichen versehen. Alle für das unmittelbare Verständnis der Erfindung nicht erforderlichen Elemente sind nicht dargestellt.

WEGE ZUR AUSFÜHRUNG DER ERFINDUNG

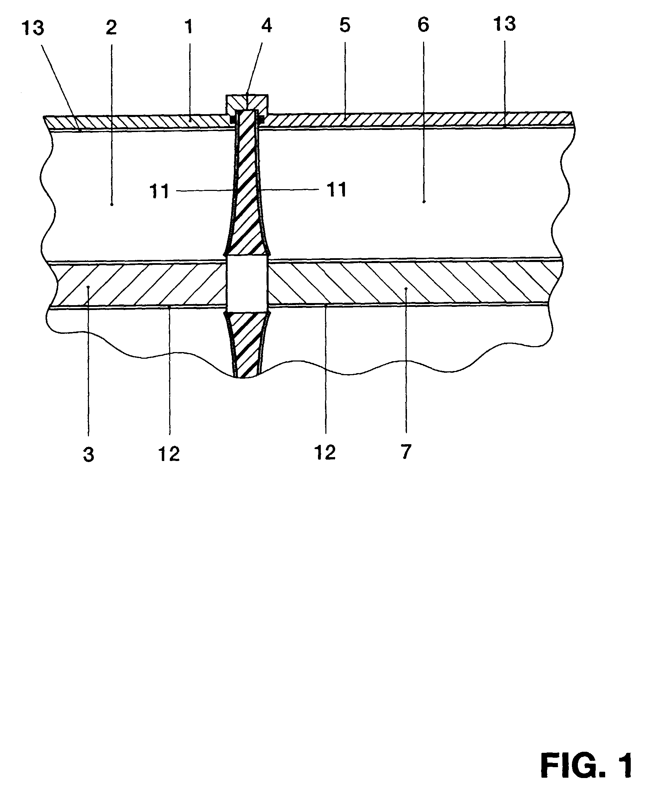

In der Fig. 1 ist ein erster, stark vereinfachter Teilschnitt durch eine erfindungsgemässe Hochspannungsanlage dargestellt. Ein im wesentlichen zylindrisch aufgebautes, druckdicht ausgeführtes metallisches Gehäuse 1 umschliesst einen mit druckbeaufschlagtem Isoliergas, beispielsweise $SF_6$, gefüllten Innenraum 2. Im Zentrum des Gehäuses 1 sind spannungsbeaufschlagte, sehr vereinfacht dargestellte Aktivteile 3 angeordnet. Das Gehäuse 1 ist mittels einer Flanschverbindung 4 mit einem weiteren, im wesentlichen zylindrisch aufgebauten, druckdicht ausgeführten metallischen Gehäuse 5 druckdicht verbunden. Auch dieses Gehäuse 5 umschliesst einen weiteren mit druckbeaufschlagtem Isoliergas, beispielsweise $SF_6$, gefüllten Innenraum 6. Im Zentrum des Gehäuses 5 sind spannungsbeaufschlagte, sehr vereinfacht dargestellte Aktivteile 7 angeordnet. Die beiden Innenräume 2 und 6 werden hier durch einen scheibenförmig ausgebildeten Schottungsisolator 8, der druckdicht in die Flanschverbindung 4 eingelassen ist, voneinander getrennt. Der Schottungsisolator 8 weist einen scheibenförmigen Isolatorkörper 9 auf, in den eine Eingussarmatur 10 druckdicht eingegossen ist. Die Eingussarmatur 10 ist mit den Aktivteilen 3 und 7 elektrisch leitend verbunden. Der Schottungsisolator 8 stützt die Aktivteile 3 und 7 gegen die Gehäuse 1 und 5 ab. Die Innenräume 2 und 6 werden durch Zersetzungsprodukte die beispielsweise durch Lichtbögen, die in nicht dargestellten Leistungsschaltern oder anderen Schaltgeräten erzeugt werden, beaufschlagt.

Der Isolatorkörper 9 ist hier aus quarzmehlgefülltem und/oder glasfaserverstärktem Giessharz hergestellt worden. Die Oberflächen des Isolatorkörpers 9 sind mit jeweils einem Schutzbelag 11, der ein- oder mehrschichtig aufgebaut sein kann, versehen. In der Figur ist der Schutzbelag 11 der besseren Anschaulichkeit halber vergleichsweise dick dargestellt, in der Regel weisen die einzelnen Schichten dieser Schutzbeläge 11 Dicken von einigen μm bis etwa 100 μm auf. Grössere Dicken der Schutzbeläge 11 werden erreicht durch ein mehrmaliges Auftragen der entsprechenden Schicht, wobei gegebenenfalls Trocknungsvorgänge zwischengeschaltet werden. Die Oberflächen der Aktivteile 3 und 7 sind ganz oder teilweise mit einer der herkömmlichen Schutzschichten 12 überzogen. Die inneren Oberflächen der Gehäuse 1 und 5 sind ganz oder teilweise mit einer der herkömmlichen Schutzschichten 13 überzogen. Es ist jedoch auch möglich, statt dieser Schutzschichten 12 oder 13 ganz oder teilweise Schutzbeläge mit einer Materialzusammensetzung entsprechend der des Schutzbelags 11 anzubringen. Ferner ist es vorstellbar, die Schutzschichten 12 oder 13 ganz oder teilweise mit einem weiteren Schutzbelag zu überziehen, dessen Materialzusammensetzung der des Schutzbelags 11 entspricht.

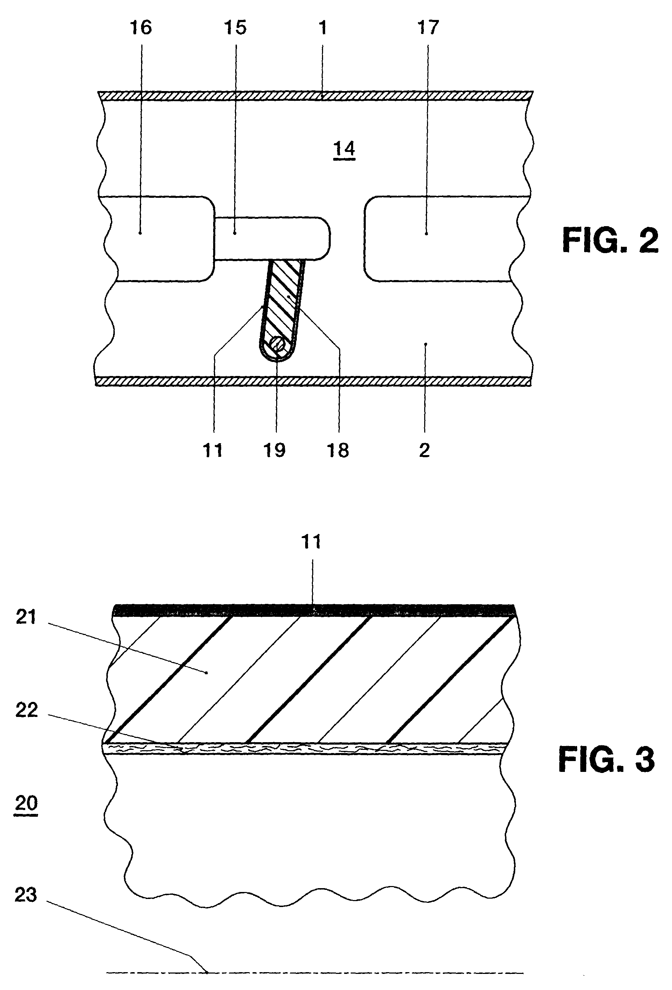

In der Fig. 2 ist ein zweiter, stark vereinfachter Teilschnitt durch eine erfindungsgemässe Hochspannungsanlage dargestellt. Das im wesentlichen zylindrisch aufgebaute, druckdicht ausgeführte metallische Gehäuse 1 umschliesst den mit druckbeaufschlagtem Isoliergas, beispielsweise $SF_6$, gefüllten Innenraum 2. Im Zentrum des Gehäuses 1 sind auch hier spannungsbeaufschlagte, sehr vereinfacht dargestellte Aktivteile angeordnet. Hier ist beispielsweise ein Trenner 14 als Aktivteil dargestellt. Der Trenner 14 weist einen beweglichen Kontakt 15 auf, der in einem Führungsteil 16 gleitet, und einen feststehenden Gegenkontakt 17, der für die Aufnahme des beweglichen Kontakts 15 eingerichtet ist. Sowohl das Führungsteil 16 als auch der feststehende Gegenkontakt 17 werden durch nicht dargestellte Isolatoren, die als Schottungsisolatoren oder als mit Durchbrüchen versehene Stützisolatoren ausgebildet sind, im Gehäuse 1 positioniert. Der bewegliche Kontakt 15 wird durch eine verschieblich mit ihm verbundene Antriebsstange 18 aus einem Isoliermaterial in axialer Richtung bewegt. Die Antriebsstange 18 wird über eine in dem Gehäuse 1 drehbar und druckdicht gelagerte Antriebswelle 19 betätigt. Der die Antriebswelle 19 antreibende Antrieb ist nicht dargestellt. Die Antriebsstange 18 kann auch andere Formen aufweisen.

Die elektrisch isolierende Antriebsstange 18 ist hier aus quarzmehlgefülltem und/oder glasfaserverstärktem Giessharz hergestellt worden. Die Oberflächen der Antriebsstange 18 sind vollständig mit einem Schutzbelag 11, der ein- oder mehrschichtig aufgebaut sein kann, versehen. In der Figur ist der Schutzbelag 11 der besseren Anschaulichkeit halber vergleichsweise dick dargestellt, in der Regel weisen die einzelnen Schichten dieser Schutzbeläge 11 Dicken von etwa 50µm bis einige 100 µm auf. Grössere Dicken der Schutzbeläge 11 werden erreicht durch ein mehrmaliges Auftragen der entsprechenden Schicht, wobei gegebenenfalls Trocknungsvorgänge zwischengeschaltet werden.

Verschiedene Leistungsschaltertypen, die in gasisolierten Schaltanlagen eingesetzt werden, weisen Löschkammern mit druckfesten, elektrisch isolierenden Löschkammerrohren auf. Auch diese Löschkammerrohre können nun aus quarzmehlgefülltem und/oder glasfaserverstärktem Giessharz hergestellt werden, wenn sie mit dem Schutzbelag 11 überzogen werden. In der Fig.3 ist ein Teilschnitt durch ein derartiges zylindrisch ausgebildetes Löschkammerrohr 20 dargestellt, welches eine Mittelachse 23 aufweist. Das Löschkammerrohr 20 weist zudem eine Wand 21 auf, deren Aussenseite mit einem Schutzbelag 11 überzogen ist, wenn dieses Rohr in einer metallgekapselten gasisolierten Schaltanlage eingesetzt wird. Wird das Rohr in einem SF$_6$-Schalter eingesetzt, der für eine Freiluftaufstellung vorgesehen ist, so ist dieser äussere Schutzbelag 11 nicht nötig. Beim Löschkammerrohr 20 ist die innere Oberfläche mit einem weiteren Schutzbelag 22 versehen, welcher entweder die gleiche Zusammensetzung aufweist wie der erwähnte Schutzbelag 11 oder welcher, beispielsweise bei auf einem Wickeldorn gewickelten Löschkammerrohren 20, als polyesterfaserverstärkte Harzschicht ausgebildet ist, wobei dem Harz vor der Verarbeitung eine chemisch reaktive Komponente, die aus mindestens einem feinstdispersen Pigment besteht, beigemischt wird. Diese Pigmentpartikel verteilen sich homogen im Harz. Es kann jedoch auch ein PETP-Faservlies in Verbindung mit einem Epoxidharz, welchem entsprechende Pigmentpatikel beigemischt wurden, eingesetzt werden. Bei der Herstellung derartiger Löschkammerrohre 20 wird in der Regel zuerst die Faserverstärkung in Form eines Vlieses auf den Wickeldorn aufgebracht, dieses Vlies wird dann mit dem Polyesterharz getränkt. Die im Polyesterharz homogen verteilten Pigmentpartikel weisen so kleine Abmessungen auf, dass sie durch das Vlies nicht festgehalten werden, d.h. auch im fertigen Schutzbelag 22 sind die Pigmentpartikel homogen verteilt. Danach wird auf diesen Schutzbelag 22 in bekannter Weise die Wand 21 gewickelt, und nach dem Aushärten dieses gewickelten Verbundteils wird aussen der Schutzbelag 11 aufgetragen.

Die Basis des Schutzbelags 11 bildet jeweils ein Lack, der einen vergleichsweise hohen Oberflächenwiderstand und damit eine gute Kriechstromfestigkeit aufweist, ferner muss er chemisch resistent gegen aggressive Zersetzungsprodukte und thermisch beständig sein. Der Lack darf zudem nicht hygroskopisch sein. Es wird häufig ein Acryllack oder ein Lack auf Polyesterbasis oder auf Polyurethanbasis oder auf Epoxidharzbasis eingesetzt, es sind aber, abhängig von der vorgesehenen Anwendung auch noch andere Lacktypen vorstellbar. Dem Lack wird vor der Verarbeitung die chemisch reaktive Komponente in der Form von feinstdispersen Pigmenten beigemischt. In der Regel werden 3 bis 30 Gewichtsprozent dieser Komponente beigemischt.

Als feinstdisperse Pigmente können, je nach Einsatzbereich des Schutzbelags 11, verschiedene, entsprechend aufbereitete Stoffe verwendet werden, wie beispielsweise Karbide, Nitride und Metalloxide wie ZnO, Fe$_2$O$_3$, Bi$_2$O$_3$, PdO, AgO, TeO, CuO, Sb$_2$O$_3$, TiO$_2$, ZrO$_2$, Al$_2$O$_3$, In$_2$O$_3$, SnO, V$_2$O$_5$ und MgO. Für den Einsatz in metallgekapselten gasisolierten Schaltanlagen, die mit SF$_6$-Gas gefüllt sind, lässt sich besonders vorteilhaft Al$_2$O$_3$ und/oder MgO verwenden. Das Al$_2$O$_3$, bzw. das MgO, wird mit Hilfe eines der bekannten Verfahren so aufbereitet, dass Partikel im Nanogrössenbereich entstehen, diese Partikel weisen eine Grösse von etwa 5nm bis 50nm auf. Als besonders günstig im Hinblick auf das Verhalten der Partikel bei der chemischen Reaktion hat sich eine Teilchengrösse von 25nm herausgestellt. Bei dieser Partikelgrösse erreicht der Pigmentanteil im Lack eine optimal grosse wirksame Oberfläche ohne jedoch den Lack zu stark einzudicken, wodurch dessen Verarbeitung erschwert würde.

## 1. Ausführungsbeispiel:

Als feinstdisperses Pigment wird Nano-Al$_2$O$_3$ Typ C der Firma Degussa, Frankfurt,BRD eingesetzt. Als Lack wird ein aus zwei Komponenten A und B zu mischender Acryllack der Firma Dold, CH-8304 Wallisellen, Schweiz, vorgesehen. Von der mit IB-16/A, Produkte-Nummer F 5190, bezeichneten Lackkomponente A werden 10 Gewichtsteile verwendet. Die Lackkomponente A wird mit 3 bis 30 Gewichtsprozent, bezogen auf den fertigen Lack, Nano-Al$_2$O$_3$ Typ C zu einem Gemenge gemischt. Das Gemenge ist vorteilhaft in einem geschlossenen Gebinde lagerfähig, da das Pigment so fein ausgebildet ist, dass es sich in diesem Gemenge nicht absetzen kann. Von der mit IB-16/B, Produkte-Nummer F 5191, bezeichneten Lackkomponente B des Acryllacks wird 1 Gewichtsteil dem Gemenge beigemischt. Der so entstandene, verarbeitungsbereite Lack kann bei Bedarf mit Xylol, mit Aethylacetat oder mit Universalverdünner verdünnt werden.

Die Beimengung von 30 Gewichtsprozent Nano-Al$_2$O$_3$ führt zu einem Schutzbelag 11 mit einer matten Oberfläche. Diese matte Oberfläche ist als griffig und besonders gut geeignet anzusehen, um einer weiteren Schicht des Schutzbelags 11 eine besonders gute Haftung zu ermöglichen. Die Dicke der einzelnen Schichten ist von der Konsistenz des Lackes abhängig, im trockenen Zustand wird eine Dicke im Bereich von 40µm bis circa 80µm angestrebt. Als Deckschicht erhält der Schutzbelag 11 in der Regel eine pigmentfreie Klarlackierung, wodurch eine besonders gute Reinigung der Lackierung ermöglicht wird.

Bei diesem Ausführungsbeispiel betrug die Teilchengrösse des beigemischten Nano-$Al_2O_3$ Typ C 20nm. Mit diesem Lack hergestellte Schutzbeläge 11 von insgesamt etwa 200µm Dicke haben Zersetzungsprodukte des $SF_6$-Gases während mehr als zehn Stunden vom damit geschützten Isolatorkörper 9 ferngehalten. Die Dauerstandversuche zeigen demnach deutlich bessere Resultate als die Versuche mit herkömmlichen Lacken. Diese Dauerstandversuche sind zurzeit noch nicht abgeschlossen.

Die Wirksamkeit der im Lack enthaltenen chemisch reaktiven Komponente in der Form eines feinstdispersen Pigments ist aus der folgenden Reaktionsgleichung zu erkennen:

$$Al_2O_3 + 6\,HF \rightarrow 2\,AlF_3 + 3\,H_2O$$

Die Flusssäure HF wird umgesetzt in die feste, nicht hygroskopische, im Schutzbelag verbleibende Verbindung $AlF_3$ und in Wasser. Das Wasser tritt aus der Lackschicht aus und wird durch den mit dem jeweiligen Innenraum der metallgekapselten gasisolierten Hochspannungsschaltanlage in Verbindung stehenden Aktivfilter unschädlich gemacht. Die Verbindung $AlF_3$ ist elektrisch isolierend, die Isolationsfestigkeit des Schottungsisolators 8 wird durch das Verbleiben dieser Verbindung im Schutzbelag 11 nicht negativ beeinflusst.

## 2. Ausführungsbeispiel:

Ein ca. 60mm breites Band aus Polyester-(PETP)-Vlies wird mit halber Überlappung um einen Wickeldorn gewickelt. Diese Anordnung wird nach dem Abschluss des Wickelns mit einem Gemenge aus cycloaliphatischem Epoxidharz mit nanostrukturiertem MgO getränkt. Von dem nanostrukturierten MgO wurden 3 bis 30 Gewichtsprozent beigemischt. Das Aushärten des Harzes zum Schutzbelag 22 erfolgte unter Unterdruck. Auf diesen Schutzbelag 22 wurde dann im herkömmlichen Filamentwinding-Verfahren ein glasfaserverstärktes Kunststoffrohr (GFK) gewickelt. Nach dem Aushärten dieses Rohlings liegt ein Kunststoffrohr vor, welches auf der Innenseite einen Schutzbelag 22 mit einer Verstärkung aus einem Polyester-(PETP)-Vlies aufweist. Wird dieses Kunststoffrohr für den Einbau in eine metallgekapselte gasisolierte Schaltanlage vorgesehen, so wird seine Aussenseite noch mit einem Schutzbelag 11 versehen.

Die Wirksamkeit dieses im Lack enthaltenen feinstdispersen Pigments ist aus der folgenden Reaktionsgleichung zu erkennen:

$$MgO + 2\,HF \rightarrow Mg\,F_2 + H_2O$$

Die Flusssäure HF wird umgesetzt in die feste, nicht hygroskopische, im Schutzbelag 22 bzw. 11 verbleibende Verbindung $MgF_2$ und in Wasser. Das Wasser tritt aus der Lackschicht aus und wird durch den mit dem jeweiligen Innenraum der metallgekapselten gasisolierten Hochspannungsschaltanlage in Verbindung stehenden Aktivfilter unschädlich gemacht. Die Verbindung $MgF_2$ ist elektrisch isolierend, die Isolationsfestigkeit des Löschkammerrohrs 20 wird durch das Verbleiben dieser Verbindung im Schutzbelag 22 bzw. 11 nicht negativ beeinflusst.

Der Einsatz von feinstdispersem MgO bietet, gegenüber dem Einsatz von feinstdispersem $Al_2O_3$, den zusätzlichen Vorteil, dass die Penetrationszeit der gasförmigen Flusssäure (HF) um mehr als das doppelte verlängert wird. Auch mit derartig ausgebildeten Schutzbelägen 22 sind weitere Dauerstandsversuche vorgesehen.

Es kann jedoch auch sinnvoll sein, nicht nur die Isolatoren mit dem Schutzbelag 11 zu versehen, sondern den Schutzbelag 11 zusätzlich in einem Bereich oder in mehreren Bereichen der Hochspannungsanlage vorzusehen, und zwar insbesondere dort, wo Schaltgase oder sonstige Schaltrückstände besonders konzentriert auftreten können.

Die aus quarzmehlgefülltem und/oder glasfaserverstärktem Giessharz hergestellten, elektrisch isolierenden Teile weisen eine besonders hohe mechanische Festigkeit auf, dieses vorteilhafte Material kann nun, dank dem Schutzbelag 11, 22 auch in gasisolierten Schaltanlagen, insbesondere auch in $SF_6$-gefüllten Hochspannungsanlagen eingesetzt werden, was erhebliche wirtschaftliche Vorteile mit sich bringt.

Ferner ist es vorstellbar, auch Freiluftisolatoren, die aus quarzmehlgefülltem und/oder glasfaserverstärktem Giessharz hergestellt sind, mit einem Schutzbelag 11 zu überziehen, um diese Isolatoren auf diese Art besser gegen Umwelteinflüsse zu schützen. Es ist auch möglich, den Schutzbelag 11 mit Hilfe chemisch passender Komponenten besonders kritischen Umwelteinflüssen anzupassen, um so ihre Lebensdauer vorteilhaft zu verlängern.

In den metallgekapselten gasisolierten Schaltanlagen treten die aggressiven Zersetzungsprodukte in der Regel nur während einer begrenzten Zeit nach den jeweiligen Schaltvorgängen auf, da in diesen Anlagen Aktivfilter vorgesehen sind, welche das Isoliergas fortlaufend reinigen und entfeuchten. Die Schutzbeläge 11 und 22, werden deshalb jeweils nur während dieser begrenzten Zeit mit den aggressiven Zersetzungsprodukten beaufschlagt. Hinzu kommt, dass die Zersetzungsprodukte, die in den Schutzbelag 11,22 zwar eindiffundiert sind, die aber noch nicht chemisch umgesetzt wurden, wieder aus den Schutzbelägen 11,22 ausdiffundieren, wenn die Konzentration der aggressiven Zersetzungsprodukte im Isoliergas der Hochspannungsanlage abgenommen hat. Die chemische Wirksamkeit der in den Schutzbelägen 11,22 eingelagerten Nano-Pigmente bleibt demnach über eine vergleichsweise lange Zeitspanne erhalten. Wird die Auftragsdicke der Schutzbeläge 11,22 und eventuell auch die Anzahl der nacheinander aufgetragenen Schichten gesteigert, so kann die Wirkungsdauer der Beläge weiter verlängert werden. Es wird in den metallgekapselten gasisolierten Schaltanlagen stets darauf geachtet, dass die während der gesamten Lebensdauer der Anlage kumulierte Kontaminationszeit, während der die aggressiven Zersetzungsprodukte auf die Schutzbeläge 11,22 einwirken, deutlich kleiner ist, als die Wirkungszeit dieser Beläge. Die Schutzbeläge 11,22 brauchen demnach vor dem Ablauf der normalen Lebensdauer der Anlage nicht erneuert zu werden. Die metallgekapselten gasisolierten Schaltanlagen, die für überdurchschnittlich häufige Schalthandlungen ausgelegt sind, werden mit entsprechend angepassten Schutzbelägen 11,22 versehen, sodass auch in diesen Hochspannungsanlagen Isolierteile aus silikathaltigen Werkstoffen problemlos eingesetzt werden können.

Der Einsatz von feinstdispersem MgO bietet, gegenüber dem Einsatz von feinstdispersem $Al_2O_3$, den zusätzlichen Vorteil, dass die Penetrationszeit der gasförmigen Flusssäure (HF) um mehr als das doppelte verlängert wird.

Werden Pigmente mit einer gröberen Struktur als der beschriebenen Nanostruktur eingesetzt, so wird die chemische Wirksamkeit etwas verschlechtert, es sind aber durchaus Anwendungen vorstellbar, wo eine derartige gröbere Struktur vorteilhaft einsetzbar ist. Ferner ist es auch möglich, Pigmente, die eine gröbere Struktur aufweisen, mit nanostrukturiertem Material vermischt anzuwenden, um so eine spezifische Anpassung an bestimmte vorgegebene Betriebsanforderungen zu erreichen.

## BEZEICHNUNGSLISTE

| | |
|---|---|
| 1 | Gehäuse |
| 2 | Innenraum |
| 3 | Aktivteile |
| 4 | Flanschverbindung |
| 5 | Gehäuse |
| 6 | Innenraum |
| 7 | Aktivteile |
| 8 | Schottungsisolator |
| 9 | Isolatorkörper |
| 10 | Eingussarmatur |
| 11 | Schutzbelag |
| 12,13 | Schutzschicht |
| 14 | Trenner |
| 15 | beweglicher Kontakt |
| 16 | Führungsteil |
| 17 | Gegenkontakt |
| 18 | Antriebsstange |
| 19 | Antriebswelle |
| 20 | Löschkammerrohr |
| 21 | Wand |
| 22 | Schutzbelag |
| 23 | Mittelachse |

## Patentansprüche

1. Hochspannungsanlage mit einem isoliergasgefüllten metallischen Gehäuse (1,5), welches spannungsbeaufschlagte Aktivteile (3,7,14) umgibt, mit Isolatoren für die elektrisch isolierende Abstützung der Aktivteile (3,7,14) im Gehäuse (1,5), mit elektrisch isolierend ausgebildeten Antriebsmitteln für die Betätigung der beweglichen Partien der Aktivteile, mit mindestens einem mindestens die Isolatoren und die elektrisch isolierend ausgebildeten Antriebsmittel bedeckenden Schutzbelag (11,22), welcher derart ausgebildet ist, dass bei Betrieb der Anlage im Isoliergas gebildete Zersetzungsprodukte in ihn eindringen, wobei der Schutzbelag (11,22) mindestens eine aus einem nanostrukturierten Material bestehende Komponente aufweist, welche mit den eindringenden Zersetzungsprodukten unter Bildung mindestens eines festen, nichthygroskopischen Umsetzungsproduktes reagiert, dadurch gekennzeichnet,

   - dass als nanostrukturiertes Material MgO vorgesehen ist.

2. Hochspannungsanlage nach Anspruch 1, dadurch gekennzeichnet,

   - dass dem nanostrukturierten Material $Al_2O_3$ in nanostrukturierter Form beigemischt ist.

3. Hochspannungsanlage nach Anspruch 2, dadurch gekennzeichnet,

   - dass das nanostrukturierte Material eine Partikelgrösse von 10nm bis 50nm, vorzugsweise jedoch eine von 25nm aufweist.

4. Hochspannungsanlage nach Anspruch 1, dadurch gekennzeichnet,

   - dass als Basis des Schutzbelags (11,22) ein Epoxidlack oder ein Lack auf der Basis von Polyester, von Acrylharz oder von Polyurethan vorgesehen ist.

5. Hochspannungsanlage nach Anspruch 1, dadurch gekennzeichnet,

   - dass als Basis des Schutzbelags (22) ein Harz dient, welches mit einer Faserverstärkung, insbesondere aus Polyester-PETP, versehen ist.

6. Hochspannungsanlage nach Anspruch 5, dadurch gekennzeichnet,

   - dass der Schutzbelag (22) als Basis für das Wickeln eines Isolierrohres eingesetzt wird.

7. Hochspannungsanlage nach einem der Ansprüche 1 bis 6, dadurch gekennzeichnet,

   - dass die Isolatoren und/oder die elektrisch isolierend ausgebildeten Antriebsmittel aus quarzmehlgefülltem oder glasfaserverstärktem Giessharz gefertigt sind.

8. Hochspannungsanlage nach Anspruch 1, dadurch gekennzeichnet,

   - dass die mindestens eine Komponente als eine Mischung aus mindestens einem nanostrukturierten Material mit mindestens einem gröber strukturierten Material ausgebildet ist, wobei die mindestens zwei Materialien entweder chemisch gleich oder unterschiedlich aufgebaut sind.

9. Hochspannungsanlage nach Anspruch 1, dadurch gekennzeichnet,

   - dass von der mindestens einen Komponente 3 bis 30 Gewichtsprozent in den jeweiligen Schutzbelag (11,22) eingelagert sind.

FIG. 1

16  15  1  17

14

# FIG. 2

11  19  18  2

11

21

22

20

23

# FIG. 3